# EUROPEAN PATENT APPLICATION

(11) **EP 3 926 192 A1**
(43) Date of publication of application: **22.12.2021**
(21) Application number: 20755684.6
(22) Date of filing: 14.02.2020
(51) Int. Cl.: F16C 19/10

(54) **MULTI-ROW THRUST BALL BEARING**

(30) Priority: 14.02.2019 JP 2019024427
(71) Applicant: NSK Ltd., Tokyo 141-8560 (JP)
(72) Inventor: SAKODA, Hironari, Fujisawa-shi, Kanagawa 251-8501 (JP); KIKUCHI, Aya, Fujisawa-shi, Kanagawa 251-8501 (JP); CHIHARA, Yuta, Fujisawa-shi, Kanagawa 251-8501 (JP)
(74) Representative: Grünecker Patent- und Rechtsanwälte PartG mbB
(86) International application number: PCT/JP2020/005700
(87) International publication number: WO 2020/166687

(57) **Abstract**

Provided is a multi-row thrust ball bearing that has a large load capacity, is thin, and can bear a radial load. According to the present invention, facing surfaces of a pair of races (21, 22) have multiple rows of race grooves (23A, 23B) that are provided along the radial direction. Circumferential edges of openings of pockets (41) of a cage (40) protrude to form tab-shaped protrusions (42) that are oppositely arranged in only the circumferential direction of the cage. The maximum radial-direction width W of the tab-shaped protrusions (42) is smaller than the maximum radial-direction width L of the race grooves (23).

## Description

### Technical Field

The present invention relates to a multi-row thrust ball bearing that includes a plurality of balls arranged in double rows in a radial direction.

### Background Art

Conventionally, thrust needle bearings have been employed to enable bearings for automobiles to withstand large thrust loads. The thrust needle bearing can be made thinner as a whole by forming a raceway with a thin washer-shaped plate, and further, since the needle and the raceway are in line contact with each other, it has a large contact area and large load capacity.

Meanwhile, since the thrust ball bearing has the ball and the ball groove in point contact with each other, it has a smaller load capacity than the thrust needle bearing. However, since the contact area is small, it has the advantage that the friction is small and the load in the radial direction can be supported to some extent.

As for the thrust ball bearing, for example, Patent Document 1 discloses a thrust bearing retainer including a first claw portion in which a peripheral edge of a pocket opening is protruded in a convex shape, and a second claw portion in which the pocket surface inside the first claw portion is protruded in a convex shape in order to prevent the rolling body from falling out of the retainer pocket, and including a plurality of claw-shaped protrusions of which diameter is smaller than the diameter of the rolling body.

Further, Patent Document 2 discloses a thrust ball bearing in which raceway grooves are provided in double rows in the radial direction on facing surfaces of two annular races, and a plurality of balls held in a retainer are arranged at contact angles between the raceway grooves.

Meanwhile, in recent years, in the field of brake actuators, a mechanism has been developed in which a rotary motion of an electric motor is converted into a linear motion by electrification to apply hydraulic pressure or press a disk. The conversion from the rotary motion to the linear motion is performed by a ball screw, a sliding screw, a rack and pinion, or the like, but at that time, by setting the lead of the ball screw or the like small, the speed can be reduced and a large thrust can be obtained with a small rotational force. When a gear drive or belt drive system is used to apply rotation to the ball screw or the like, a radial load and a thrust load may be generated at the same time on the ball screw or the like.

For a bearing that supports such a thrust, a deep groove ball bearing, a four-point contact ball bearing, or an angular contact ball bearing that can support both the radial load and the thrust load is often used. However, in order to support a large thrust load with the angular contact ball bearing, there is a concern that the structure is complicated, such as applying a preload to the angular contact ball bearing. Further, when it is necessary to support a larger thrust load, both a thrust bearing having a high load capacity such as a thrust needle bearing or the like and a radial bearing that supports the radial load are required.

Therefore, when the thrust ball bearing that can support the radial load while mainly supporting the thrust load is used as a support bearing used for the brake actuator, it is desired that a thrust ball bearing is developed, which has a small torque, can contribute to the improvement of system efficiency, has a high load capacity, and realizes a thinned wall.

In the thrust ball bearing described in Patent Document 1 described above, the claw-shaped protrusion is provided on the peripheral edge of the pocket opening in order to prevent the rolling body (ball) from falling out of the retainer pocket, but as illustrated in Fig. 1(b) of Patent Document 1, since the claw-shaped protrusion is provided so as to protrude from the flat surface of the retainer in the circumferential direction and the radial direction of the retainer, in order to prevent the claw-shaped protrusion from interfering with the pair of raceways, there is a limit to thinning the wall of the thrust ball bearing.

Further, in the thrust ball bearing described in Patent Document 2, since the retainer does not include the claw-shaped protrusion described above, the interference between the claw-shaped protrusion and the pair of raceways is not a problem, but because there is no claw-shaped protrusion that prevents the rolling body from falling out of the pocket, thus requiring that a wall thickness of the retainer be secured so that the rolling body does not fall out of the pocket, in this case as well, there is a limit to thinning the wall of the thrust ball bearing.

### Prior Art Document

### Patent Document

Patent Document 1: JP-A-2008-223970
Patent Document 2: JP-A-2006-200677

### Summary of Invention

### Technical Problem

The present invention has been made in view of the problems described above, and an object thereof is to provide a thrust ball bearing which has a large load capacity, can realize thinned wall, and can further withstand a radial load.

### Solution to Problem

The above object of the present invention is achieved by the configuration (1) below.
(1) A multi-row thrust ball bearing including:
   a pair of raceways formed in an annular shape and disposed axially apart from each other;
   a plurality of balls rotatably disposed between the pair of raceway rings;
   a retainer, including a plurality of pockets, disposed between the pair of raceways and holding the plurality of balls at predetermined intervals, wherein:
      each of the pair of raceways has a plurality of rows of raceway grooves provided along a radial direction, the raceway grooves being disposed on surfaces of the pair of raceways facing each other;
      the retainer includes claw-shaped projections each of which protrudes from a periphery of an opening of each of pockets in a convex shape and are disposed opposite only in the circumferential direction of the retainer; and
      a maximum width of the claw-shaped protrusions in the radial direction is smaller than a maximum width of the raceway grooves in the radial direction

According to this configuration, a plurality of balls are arranged in each of the plurality of rows of raceway grooves, so that the load capacity of the thrust ball bearing is increased. In addition, claw-shaped protrusions are provided, which protrude from peripheral edges of openings of the pockets in a convex shape and are arranged to face each other only in a circumferential direction of the retainer, and a maximum width of the claw-shaped protrusions in the radial direction is smaller than a maximum width of the raceway grooves in the radial direction, so that the intervals between the pair of raceways in the axial direction can be narrowed, and the multi-row thrust ball bearing can be thinned.

Further, a preferred embodiment of the present invention includes the following configurations (2) to (7).

(2) The multi-row thrust ball bearing according to (1) described above, in which at least some of the plurality of pockets have phases different from each other in the circumferential direction between the pockets on an outer diameter side and the pockets on an inner diameter side.

According to this configuration, when viewed from the radial direction, by arranging the pocket on the inner diameter side at a position between two pockets on the outer diameter side that are adjacent to each other, the pockets on the outer diameter side and the pocket on the inner diameter side can be brought closer to each other in the radial direction, and more pockets can be formed in the retainer, thereby further increasing the load capacity.

(3) The multi-row thrust ball bearing according to (2) described above, in which the retainer includes continuous portions that connect, among the pockets on the outer diameter side and the pockets on the inner diameter side that are adjacent to each other in the radial direction, the pockets on the outer diameter side and the pockets on the inner diameter side at relatively narrow intervals therebetween.

According to this configuration, it is possible to prevent the wall between the pockets arranged close to each other in the radial direction from being broken, and it is possible to prevent the thrust ball bearing from being damaged due to the biting of the broken debris.

(4) The multi-row thrust ball bearing according to any one of (1) to (3) described above, in which the pockets are arranged at irregular intervals in the circumferential direction.

According to this configuration, it is possible to prevent the phase difference between the pockets on the outer diameter side and the inner diameter side from becoming small, and it is possible to prevent the walls of the pockets adjacent to each other in the radial direction from being thinned.

(5) The multi-row thrust ball bearing according to any one of (1) to (4) described above, in which each of the pair of raceways includes a recess configured to accommodate the retainer..

According to this configuration, it is possible to prevent interference between the retainer and the pair of raceways while ensuring a predetermined thickness required for the retainer, and to achieve thinning of the multi-row thrust ball bearing. Further, the recesses obtained by forming the outer diameter side edge portion and the inner diameter side edge portion can be utilized as a lubricant reservoir for lubricating the balls, and the rolling resistance of the balls is reduced, and wear of the balls, the outer diameter side raceway groove, and the inner diameter side raceway groove is suppressed.

(6) The multi-row thrust ball bearing according to any one of (1) to (5) described above, in which a depth of the raceway groove is 20 to 30% of a diameter of the ball, and a groove curvature of the raceway groove is 50.5 to 56% of the diameter of the ball.

According to this configuration, the balls are prevented from riding over, and the load capacity of the multi-row thrust ball bearings is increased.

(7) The multi-row thrust ball bearing according to any one of (1) to (6) described above, in which a ridge line, formed by the raceway groove and a shoulder part of the raceway groove, is chamfered.

According to this configuration, the occurrence of edge load due to the ride-over of the balls is alleviated.

### Advantageous Effects of Invention

According to the multi-row thrust ball bearing of the present invention, the pair of raceways have double rows of raceway grooves provided along the radial direction on the surfaces facing each other, respectively, and therefore, as compared with the conventional thrust ball bearings, the load can be supported by more balls, and the load capacity of the thrust ball bearings can be increased.

Further, since the retainer includes the claw-shaped protrusions that protrude from the peripheral edges of the openings of the pockets in a convex shape and that are arranged to face each other only in the circumferential direction of the retainer, and the maximum width of the claw-shaped protrusions in the radial direction is smaller than the maximum width of the raceway groove in the radial direction, the claw-shaped protrusions can enter the raceway grooves, and the thrust ball bearing can be thinned.

### Brief Description of Drawings

Fig. 1 is a vertical cross-sectional view illustrating a main part of a multi-row thrust ball bearing according to an embodiment of the present invention.
Fig. 2 is an exploded perspective view illustrating the multi-row thrust ball bearing illustrated in Fig. 1.
Fig. 3 is an enlarged perspective view illustrating a portion surrounded by the rectangle A in Fig. 2.
Fig. 4 is an enlarged perspective view illustrating a portion surrounded by the rectangle B in Fig. 2.
Fig. 5 is a plan view of a retainer, illustrating a state in which the phases of the pockets on the inner diameter side and the outer diameter side are different from each other.
Fig. 6 is a plan view of the retainer, illustrating a state in which the pockets adjacent to each other in the radial direction are continuously formed.
Fig. 7 is a plan view of the retainer, illustrating a state in which the pockets on the inner diameter side and the outer diameter side are formed at irregular intervals.
Fig. 8 is a vertical cross-sectional view illustrating a main part of the multi-row thrust ball bearing in which ridge lines formed by raceway grooves and shoulder portions are chamfered.

### Description of Embodiment

Hereinafter, an embodiment of the multi-row thrust ball bearing according to the present invention will be described in detail with reference to the drawings.

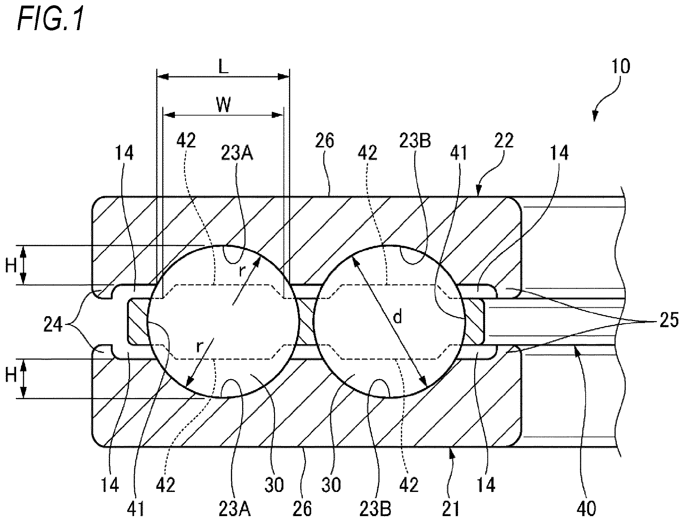

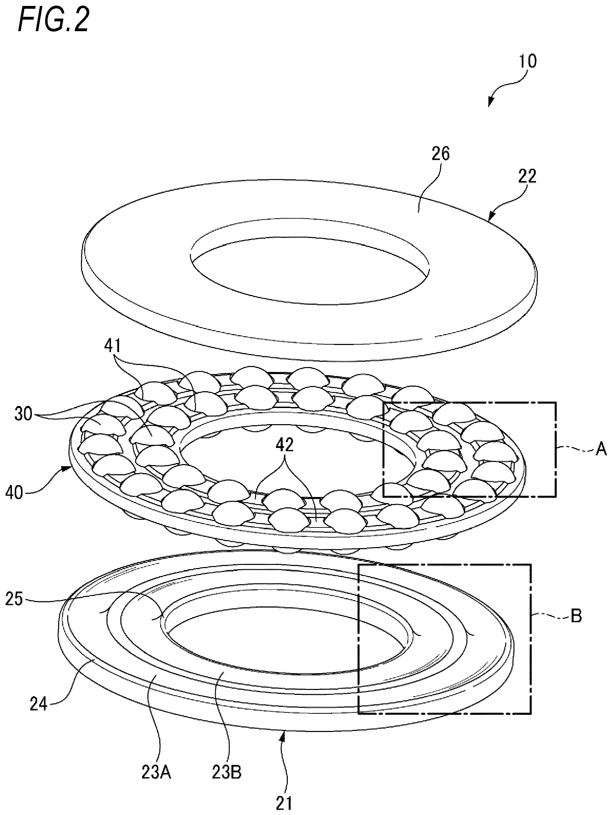

As illustrated in Figs. 1 and 2, a multi-row thrust ball bearing 10 of the present embodiment includes a pair of raceways 21 and 22 formed in an annular shape and arranged in parallel apart from each other in the axial direction, a plurality of balls 30 (rolling bodies) rotatably arranged between the pair of the raceways 21 and 22, and a retainer 40 including a plurality of pockets 41 rotatably holding the plurality of balls 30 at predetermined intervals.

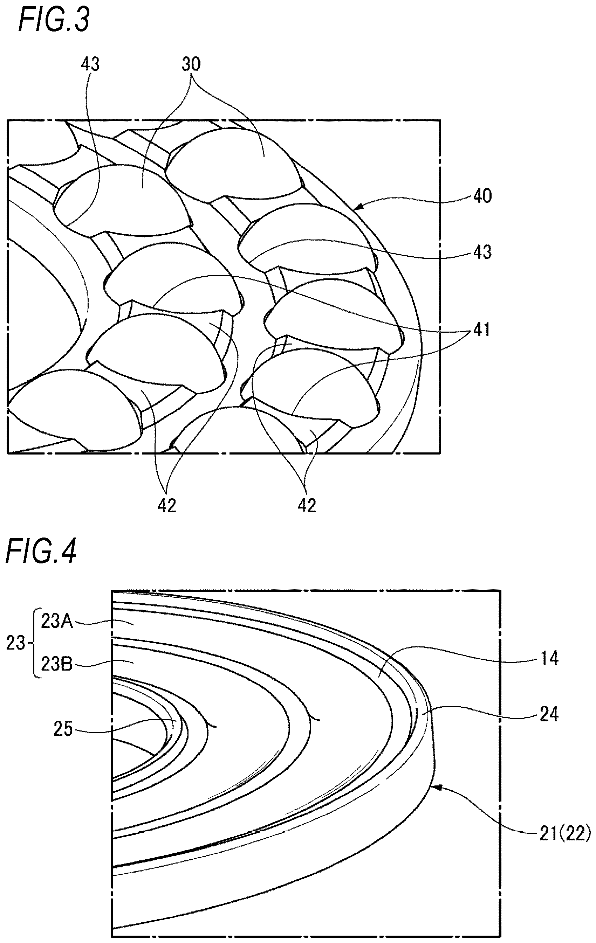

Referring to Fig. 4, the pair of raceways 21 and 22 are formed in an annular shape, and include double rows of raceway grooves 23 on surfaces facing each other. The double rows of raceway grooves 23 are two rows of raceway grooves 23, and specifically include an outer diameter side raceway groove 23A and an inner diameter side raceway groove 23B. The outer diameter side raceway groove 23A is formed on the outer diameter side of the raceways 21 and 22 in the radial direction. The inner diameter side raceway groove 23B is formed on the inner diameter side in the radial direction from the outer diameter side raceway groove 23A of the raceways 21 and 22, concentrically with the outer diameter side raceway groove 23A. That is, each of the pair of raceways 21 and 22 includes two rows of raceway grooves 23 formed of the outer diameter side raceway groove 23A and the inner diameter side raceway groove 23B, which are concentrically formed.

The outer diameter side raceway groove 23A and the inner diameter side raceway groove 23B are formed so that the cross-sectional shape in the radial direction is substantially arcuate. Further, as illustrated in Fig. 1, a depth H of the raceway groove 23 is set in the range of 20 to 30% of a diameter d of a ball 30, and the ball 30 is prevented from riding over when a radial load is applied to the multi-row thrust ball bearing 10. A groove curvature r of the raceway groove 23 is set in the range of 50.5 to 56% of the diameter d of the ball 30 according to the magnitude of the input load.

An annular outer diameter side edge portion 24 and an inner diameter side edge portion 25 are formed so as to protrude in the axial direction on the outer diameter side and the inner diameter side of the facing surfaces of the raceways 21 and 22, respectively. Processing of the raceways 21 and 22 requires grinding process of a back surface portion 26, the outer diameter side raceway groove 23A, and the inner diameter side raceway groove 23B. The grinding process of the back surface portion 26 requires an outer diameter side guide portion having a predetermined thickness determined for each processing equipment, and the outer diameter side edge portion 24 is used as the outer diameter side guide portion.

By the outer diameter side edge portion 24 and the inner diameter side edge portion 25, there are annular recesses 14 formed on the facing surfaces of the raceways 21 and 22, which are capable of accommodating the retainer 40, between the outer diameter side edge portion 24 and the inner diameter side edge portion 25. As illustrated in Fig. 1, by accommodating and arranging the retainer 40 (more specifically, flat portions of the retainer 40 other than claw-shaped protrusions 42 to be described later) in the annular recesses 14, a predetermined thickness required for the retainer 40 is ensured, while interference between the retainer 40 and the raceways 21 and 22 is prevented, such that thinning of the multi-row thrust ball bearing 10 is achieved.

Further, the annular recesses 14 obtained by forming the outer diameter side edge portion 24 and the inner diameter side edge portion 25 can be utilized as a lubricant reservoir for lubricating the balls 30, and the rolling resistance of the balls 30 is reduced, and wear of the balls 30, the outer diameter side raceway groove 23A, and the inner diameter side raceway groove 23B is suppressed.

In the present embodiment, the pair of raceways 21 and 22 and the plurality of balls 30 are made of metal, and it is preferable to form a surface-hardened layer by nitriding or the like in order to improve durability. Further, by forming the raceways 21 and 22 from the same member, the groove accuracy of the outer diameter side raceway groove 23A and the inner diameter side raceway groove 23B of the raceways 21 and 22 can be improved, and the manufacturing cost can be reduced.

Now, as illustrated in Figs. 1 to 3, in the retainer 40, the plurality of pockets 41 are formed in the double rows along the circumferential direction so as to face the outer diameter side raceway groove 23A and the inner diameter side raceway groove 23B of the raceways 21 and 22. The pocket 41 is a hole that penetrates the retainer 40 in the axial direction and rotatably holds the ball 30, and on a peripheral edge 43 of the opening (opening edge portion) of each pocket 41, a pair of claw-shaped protrusions 42 formed so as to protrude in an axial direction are arranged so as to face each other only in the circumferential direction of the retainer 40. That is, the claw-shaped protrusions 42 formed on the opening edge portion 43 of each pocket 41 are formed only in the circumferential direction of the retainer 40, and the claw-shaped protrusions 42 are not provided in the radial direction.

As illustrated in Fig. 3, the claw-shaped protrusions 42 formed on the opening edge portion 43 of each pocket 41 so as to face the circumferential direction of the retainer 40 may be formed integrally with the adjacent claw-shaped protrusion 42, or may be formed independently therefrom.

Further, as illustrated in Fig. 1, the maximum width W of the claw-shaped protrusion 42 in the radial direction is set to be smaller than the maximum width L of the outer diameter side raceway groove 23A and the inner diameter side raceway groove 23B in the radial direction (that is, W < L). In this way, the claw-shaped protrusions 42 formed on the retainer 40 are arranged to face each other only in the circumferential direction of the retainer 40, and the maximum width W of the claw-shaped protrusion 42 in the radial direction is set to be smaller than the maximum width L of the outer diameter side raceway groove 23A and the inner diameter side raceway groove 23B in the radial direction such that, when assembling the multi-row thrust ball bearing 10, the claw-shaped protrusion 42 can be inserted into the outer diameter side raceway groove 23A and the inner diameter side raceway groove 23B.

As a result, by ensuring the height of the claw-shaped protrusion 42, the ball 30 can be reliably held and the ball 30 can be prevented from falling out of the pocket 41. Further, even when the pair of raceways 21 and 22 are arranged closely to each other, since there is no possibility that the claw-shaped protrusions 42 interfere with the raceways 21 and 22, the multi-row thrust ball bearing 10 can be thinned.

The retainer 40 preferably has a sufficient elasticity to allow the claw-shaped protrusions 42 to bend and open when the ball 30 is fitted into the pocket 41, and has a small frictional resistance. For example, for its material, a synthetic resin is used, and for example, resins such as polyamide, polyacetal, high-density polyethylene, nylon, and the like can be used.

The multi-row thrust ball bearing 10 of the present embodiment is such that, by arranging the balls 30 along the double rows on the outer diameter side and the inner diameter side of the pair of raceways 21 and 22, the number of balls 30 is increased, and the load capacity is increased while space is efficiently utilized. The number of balls 30 on the outer diameter side and the inner diameter side can be arbitrarily set.

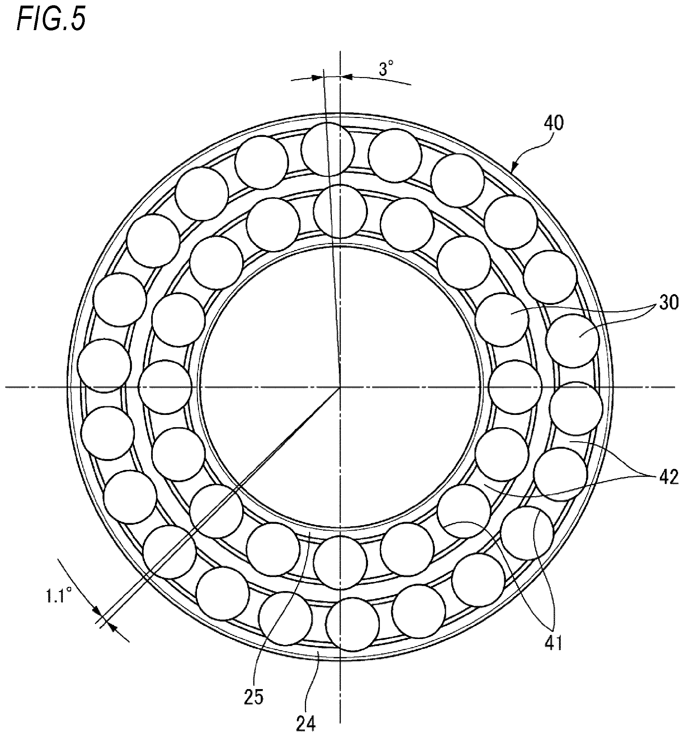

Further, as illustrated in Fig. 5, it is preferable that at least some of the plurality of pockets have phases different from the others in the circumferential direction between the pockets 41 on the outer diameter side and the pockets 41 on the inner diameter side, that is, that they are arranged such that the pockets 41 on the outer diameter side and the pockets 41 on the inner diameter side do not have matching phase in the circumferential direction, and are shifted from each other (for example, as illustrated in Fig. 5, the phase is shifted to 1.1° or 3°). As a result, when viewed from the radial direction, by arranging the pocket 41 on the inner diameter side at a position between two pockets 41 in the outer diameter side that are adjacent to each other, the pockets 41 on the outer diameter side and the pockets 41 on the inner diameter side can be brought closer to each other in the radial direction. As a result, it is possible to form more pockets in the retainer, thereby increasing the load capacity.

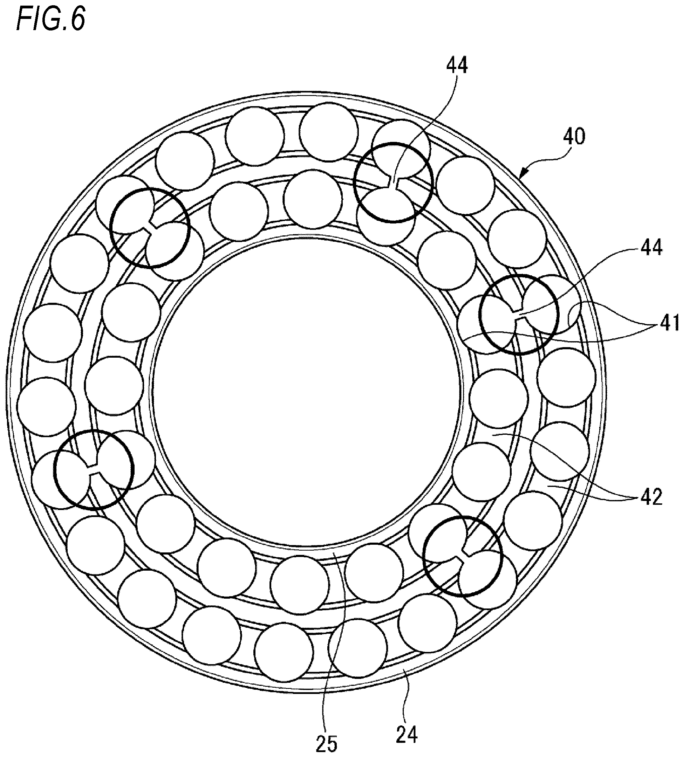

However, even when the pockets 41 on the outer diameter side and the pockets 41 on the inner diameter side are arranged so as to be shifted in phase from each other, as illustrated in Fig. 6, the phases of the pockets 41 on the outer diameter side and the inner diameter side may be periodically close to each other. When the pockets 41 on the outer diameter side and the inner diameter side have close phase to each other, since the wall that separates the pockets 41 adjacent to each other in the radial direction is thin, there is a concern that the wall may be broken and biting may occur during the operation of the multi-row thrust ball bearing 10.

Therefore, for those portions where the phases of the pockets 41 on the outer diameter side and the inner diameter side are close to each other and the walls of the pockets 41 are relatively thin as compared with the walls of the other portion, it is preferable that continuous portions 44 for connecting the pockets 41 on the outer diameter side and the pockets 41 on the inner diameter side are provided in advance in the retainer to prevent the walls from being broken during the operation of the multi-row thrust ball bearing 10. The phase difference between the pockets 41 on the outer diameter side and the inner diameter side that requires the continuous portion 44 to be formed is 5° or less, for example.

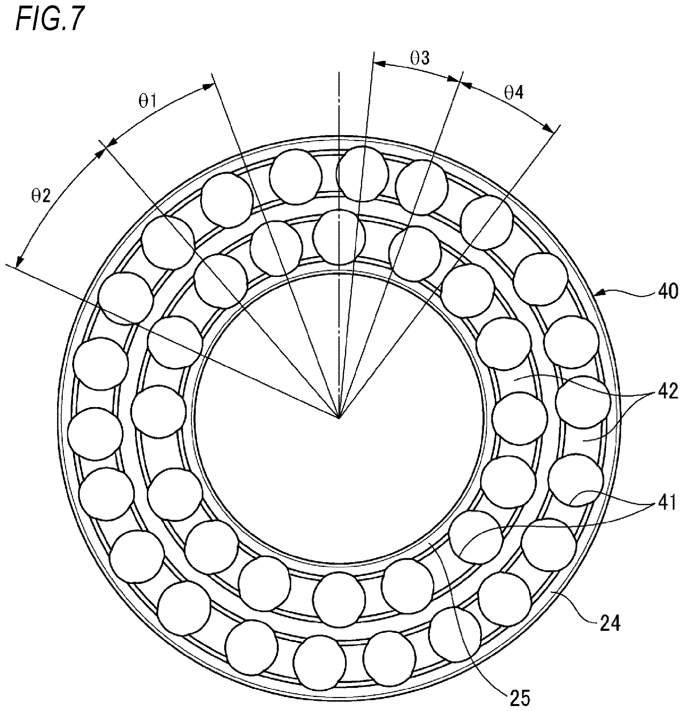

Further, as illustrated in Fig. 7, by having circumferential intervals (θ1, θ2) between the pockets 41 on the inner diameter side and circumferential intervals (θ3, θ4) between the pockets 41 on the outer diameter side as irregular intervals (that is, θ1 # θ2, θ3 # θ4), a decrease in the phase difference of the pockets 41 between the outer diameter side and the inner diameter side is avoided, thereby preventing thinning of the wall that separates the pockets 41 on the outer diameter side pocket 41 from the inner diameter side.

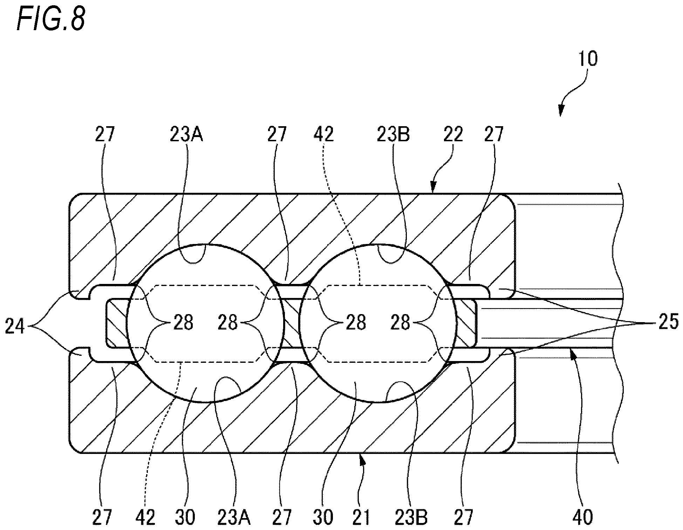

Further, as illustrated in Fig. 8, it is preferable to form chamfered portions 28 by turning or grinding on the ridge line between the outer diameter side raceway groove 23A and the inner diameter side raceway groove 23B and respective shoulder portions 27. A chamfered portion 28 is preferably an R-chamfered portion having a radius of about 0.25 to 2 mm. As a result, even when a radial load larger than expected is applied to the multi-row thrust ball bearing 10 to cause the ball 30 to ride over, the occurrence of edge load due to the contact between the ball 30 and the shoulder portion 27 is alleviated, and the life of the multi-row thrust ball bearing 10 can be extended.

As described above, according to the multi-row thrust ball bearing 10 of the present embodiment, the plurality of balls 30 are arranged in double rows between the outer diameter side raceway groove 23A and the inner diameter side raceway groove 23B of the pair of raceways 21 and 22. As a result, the load can be supported by more balls than the conventional thrust ball bearing, the load capacity of the thrust ball bearings can be increased, and both the radial load and the thrust load can be supported.

Further, the claw-shaped protrusion 42 is formed on the opening edge portion 43 of each pocket 41 so as to face only in the circumferential direction of the retainer 40. The maximum width W of the claw-shaped protrusion 42 in the radial direction is set to be smaller than the maximum width L of the outer diameter side raceway groove 23A and the inner diameter side raceway groove 23B in the radial direction. As a result, the multi-row thrust ball bearing 10 is assembled with the claw-shaped protrusions 42 accommodated in the outer diameter side raceway groove 23A and the inner diameter side raceway groove 23B, so that the intervals between the pair of raceways 21 and 22 can be narrowed, and the multi-row thrust ball bearing 10 can be thinned.

Note that the present invention is not limited to the embodiments described above, but may encompass modifications or improvements, as appropriate. For example, in the present embodiment, although it has been described that the balls are arranged in two rows at positions different from each other in the radial direction, the balls may be arranged in multiple rows including three or more rows (that is, a multi-row thrust ball bearing).

Although various embodiments have been described above with reference to the drawings, it goes without saying that the present invention is not limited to such examples. It will be apparent that those skilled in the art, within the scope described in the claims, can come up with various kinds of modification examples, or modifications, which are naturally within the technical scope of the present disclosure. In addition, the components in the embodiment described above may be arbitrarily combined without departing from the spirit of the disclosure.

This application is based upon Japanese Patent Application (Application No. 2019-024427), filed on February 14, 2019, the entire contents of which are incorporated herein by reference.

### Reference Signs List

- 10:: multi-row thrust ball bearing
- 14:: recess
- 21, 22:: raceway
- 23:: raceway groove
- 23A:: outer diameter side raceway groove (raceway groove)
- 23B:: inner diameter side raceway groove (raceway groove)
- 24:: outer diameter side edge portion
- 25:: inner diameter side edge portion
- 26:: back surface portion
- 27:: shoulder portion
- 28:: chamfered portion
- 30:: ball (rolling body)
- 40:: retainer
- 41:: pocket
- 42:: claw-shaped protrusion
- 43:: opening edge portion (periphery of opening)
- 44:: continuous portion
- d:: diameter of ball
- H:: depth of raceway groove
- L:: maximum width of raceway groove in radial direction
- r:: groove curvature of raceway groove
- W:: maximum width of claw-shaped protrusion in radial direction

## Claims

1. A multi-row thrust ball bearing comprising:
a pair of raceways formed in an annular shape and disposed axially apart from each other;
a plurality of balls rotatably disposed between the pair of raceway rings;
a retainer, including a plurality of pockets, disposed between the pair of raceways and holding the plurality of balls at predetermined intervals, wherein:
each of the pair of raceways has a plurality of rows of raceway grooves provided along a radial direction, the raceway grooves being disposed on surfaces of the pair of raceways facing each other;
the retainer includes claw-shaped projections each of which protrudes from a periphery of an opening of each of pockets in a convex shape and are disposed opposite only in the circumferential direction of the retainer; and
a maximum width of the claw-shaped protrusions in the radial direction is smaller than a maximum width of the raceway grooves in the radial direction.

2. The multi-row thrust ball bearing according to claim 1, wherein
at least some of the plurality of pockets have phases different from each other in the circumferential direction between the pockets on an outer diameter side and the pockets on an inner diameter side.

3. The multi-row thrust ball bearing according to claim 2, wherein
the retainer includes continuous portions that connect, among the pockets on the outer diameter side and the pockets on the inner diameter side that are adjacent to each other in the radial direction, the pockets on the outer diameter side and the pockets on the inner diameter side at relatively narrow intervals therebetween.

4. The multi-row thrust ball bearing according to any one of claims 1 to 3, wherein
the pockets are arranged at irregular intervals in the circumferential direction.

5. The multi-row thrust ball bearing according to any one of claims 1 to 4, wherein each of the pair of raceways includes a recess configured to accommodate the retainer.

6. The multi-row thrust ball bearing according to any one of claims 1 to 5, wherein
a depth of the raceway groove is 20 to 30% of a diameter of the ball, and a groove curvature of the raceway groove is 50.5 to 56% of the diameter of the ball.

7. The multi-row thrust ball bearing according to any one of claims 1 to 6, wherein
a ridge line, formed by the raceway groove and a shoulder part of the raceway groove, is chamfered.
